# EUROPÄISCHE PATENTANMELDUNG

(11) **EP 0 734 033 A2**
(43) Veröffentlichungstag der Anmeldung: **25.09.1996**
(21) Anmeldenummer: 96104273.6
(22) Anmeldetag: 18.03.1996
(51) Int. Cl.: H01G 4/38, H01G 4/35

(54) **Metallisierter Wickelkondensator mit X-Y-Mehrfachkapazität**

(30) Priorität: 23.03.1995 DE 19510624
(71) Anmelder: Eichhoff-Werke GmbH, 36110 Schlitz (DE)
(72) Erfinder: Wink, Reinhold, Dipl.-Betriebswirt, 36110 Schlitz (DE); Gruner, Mathias, Ingenieur, 36110 Schlitz (DE)
(74) Vertreter: Patentanwälte Ostriga & Sonnet

(57) **Zusammenfassung**

Dargestellt und beschrieben ist ein metallisierter Papier- oder Kunststoffolien-Kondensator mit Mehrfachkapazität, insbesondere X-Y-Kondensator zur Funkentstörung. Auf einem üblichen Wickelkondensator entsprechenden Grundwickel sind in koaxialer Zuordnung zu diesem sowie untereinander axialbeabstandet zwei Zusatzwickel aufgebracht. Der stirnkontaktierte Grundwickel bildet die X-Kapazität und die Zusatzwickel die beiden Y-Kapazitäten einer Funkentstör-Kondensatoranordnung aus. Dabei sind die äußeren (Ring)Stirnseiten der Zusatzwickel jeweils gemeinsam mit der zugeordneten Stirnseite des Grundwickel kontaktiert. Eine weitere Kontaktierung für einen dritten Anschlußstift ist im Ringspaltbereich zwischen den beiden Zusatzwickeln vorgesehen. Mittels drei auf diese Weise geschaffenen Abgriffsmöglichkeiten ist es auf einfache Weise möglich, die X-Kapazität zwischen Phase und Nulleiter einer Netzleitung anzuschließen und je eine Y-Kapazität zwischen Schutzleiter und Phase einerseits und Schutzleiter und Nulleiter andererseits.

## Beschreibung

Die Erfindung bezieht sich auf einen metallisierten Kunststoffolien- oder Papier-Kondensator mit Mehrfachkapazität, insbesondere X-Y-Kondensator zur Funkentstörung, umfassend wenigstens einen Wickel aus folienhaften Bahnen dielektrischen Materials, die auf einer Fläche bis auf freie Rand- oder Mittelstreifen mit Metallbeschichtungen versehen sind, sowie mit an metallisierten Kontakten angebrachten Anschlüssen zum Abgriff wenigstens zweier verschiedener Kapazitäten.

Derartige Kondensatoren werden z.B. für Funkentstörzwecke verwendet und umfassen zwei Y-Kapazitäten, die einerseits zwischen Phase und Schutzleiter, andererseits zwischen Nulleiter und Schutzleiter geschaltet werden und eine X-Kapazität zwischen Phase und Nulleiter. Derartige X-Y-Kondensatoren, also Kondensatoren, die in einer einzigen Baugruppe Mehrfach-Kapazitäten umfassen, sind in zahlreichen Ausführungen bekannt.

Entsprechend der EP-B-0 090 170 ist ein kapazitives Schaltungsfilter bekannt mit einem Wickel, der aus wenigstens einer ersten Bahn aus einem dielektrischen Material besteht, die mit wenigstens einer durchgehenden Metallbeschichtung versehen ist, die die Seitenränder der Bahn unbedeckt läßt, und wenigstens einer zweiten Bahn aus einem dielektrischen Material, die mit zwei durchgehenden Metallbeschichtungen versehen ist, die sich bis zu den Seitenrändern der Bahn erstrecken und voneinander durch eine Trennzone getrennt sind, die frei von Metallbeschichtung ist. Zum Abgriff der Mehrfachkapazitäten ist wenigstens ein Einschnitt in den Wickel vorgesehen, der sich von einer Stirnfläche des Wickels bis wenigstens zur Trennzone zwischen den Metallbeschichtungen der zweiten Bahn erstreckt. Zur Ausbildung eines Kondensators mit wenigstens einer X- und zwei Y-Kapazitäten sind zwei Einschnitte in den Kondensatorwickel einzubringen. Dies geschieht vorzugsweise mittels eines Fräsvorgangs, und zur Gewährleistung optimaler Selbstheilungseigenschaften der so mechanisch getrennten Kondensatorwickelabschnitte sollten diese Schnitte schräg zur Achse verlaufend angebracht werden. Diese Methode zur Herstellung eines Kondensators mit Mehrfachkapazität ist sehr aufwendig und erfordert zusätzlich zu den Maschinen, wie sie üblicherweise für das Wickeln und Konfektionieren von Wickelkondensatoren verwendet werden, wenigstens noch eine sehr genau arbeitende Fräsmaschine und die für diesen Bearbeitungsschritt erforderlichen Transport- und Übergabestationen.

Die Aufwendigkeit dieses Verfahrens wurde erkannt und mit der EP-B-0 190 090 ein Verfahren vorgeschlagen zur Herstellung eines Kondensators mit gleichfalls einen Wickel, der dadurch Mehrfachkapazitäten schafft, daß entmetallisierte Zonen wenigstens in einer der Metallschichten, und zwar in jeder der Windungen vorgesehen sind, und diese entmetallisierten Zonen im wesentlichen radial in der Wicklung aufeinander ausgerichtet sind. Zur Bildung eines X-Y-Kondensators sind drei solcher entmetallisierten Zonen, vorzugsweise in sternförmiger Anordnung vorzusehen. Die Entmetallisierung muß daher pro Wickellage, also während jeder Wickelumdrehung, dreimal ausgeführt werden, und zwar mit Hilfe einer Elektrode, die an den entsprechenden Wickelstellen die Metallisierung auf der Folie verdampft. Es versteht sich von selbst, daß aufgrund dieser Kondensatorbauart der Wickelvorgang nur noch stark verlangsamt und daher nicht mehr wirtschaftlich-rationell durchgeführt werden kann. Auch dieses Verfahren ist folglich, wie das eingangs erwähnte, viel zu aufwendig für eine kostengünstige Massenproduktion von Mehrfachkapazitäts-Kondensatoren.

Die EP-B-0 222 547 beschreibt einen weiteren Kondensator mit mehreren Kapazitäten, der aus einer größeren Vielzahl von dielektrischen und elektrisch leitenden Bahnen gewickelt ist und bei dem ein Mittenabgriff durch einen in den Wickel eingearbeitenen Anschlußstreifen hergestellt wird. Mittels Ultraschallverschweißung oder ähnlicher Techniken wird der Anschlußstreifen mit der Folie, an der er angeschlossen werden soll, verbunden. Auch diese Konstruktion ist aufwendig und läßt sich zwar bei Papier-Metall-Folien-Kondensatoren, bei metallisierten Kunststoffolienkondensatoren (MKT oder MKP-Kondensatoren) oder metallisierten Papierkondensatoren (MP-Kondensatoren), mit denen allein sich die vorliegende Erfindung befaßt, nicht sinnvoll realisieren.

Schließlich ist aus EP-B 0 215 361 ein Wickelkondensator mit Mehrfachkapazität bekannt, bei dem die einzelnen Kapazitäten durch Einschnitte voneinander getrennt sind. Diese Anordnung und Ausbildung ist also ähnlich und mit den gleichen Nachteilen behaftet wie die nach EP-B 0 190 090.

Von diesem Stand der Technik ausgehend, liegt der Erfindung die Aufgabe zugrunde, einen metallisierten Kunststoffolien- oder Papier-Kondensator mit Mehrfachkapazität, insbesondere einen X-Y-Kondensator für Funkentstörzwecke, bereitzustellen, der sich auf demgegenüber vereinfachte Weise herstellen läßt, und zwar insbesondere ausschließlich auf herkömmlichen Kondensator-Wickelmaschinen ohne Einsatz von aufwendigen Zusatzmaschinen.

Die Erfindung löst diese Aufgabe in erster Linie und im wesentlichen dadurch, daß der Kondensator einen ersten Wickel (Grundwickel) mit je einer Anschlußkontaktierung an seinen Stirnseiten umfaßt und daß unter Berücksichtigung eines isolierten Übergangs auf diesen Grundwickel zwei axialbeabstandet konzentrisch darauf angebrachte zweite Wickel (Zusatzwickel) mit gleichfalls stirnseitigen Anschlußkontaktierungen und einer gemeinsamen Mittenkontaktierung aufgewickelt sind, wobei es zweckmäßig ist, wenn die beiden Zusatzwickel bis zu den Stirnseiten des Grundwickels reichen und daß dort mit diesem Anschlußkontaktierungen für je einen gemeinsamen Anschluß ausgebildet sind, womit der Grundwickel die X-Kapazität und jeder Zusatzwickel eine Y-Kapazität ausbilden können.

Weitere Vorteile und vorzugsweise Ausgestaltungen ergeben sich aus den sonstigen Unteransprüchen.

Damit ist ein metallisierter Kunststoffolien- oder Papier-Kondensator mit Mehrfachkapazität bereitgestellt, dessen Grundwickel, zunächst wie jeder übliche metallisierte Einzelkapazitäts-Kondensator gewickelt wird. An diesen Wickel schließen sich zwei Zusatzwickel an, die vom Grundwickel koaxial getragen sind. Diese Zusatzwickel bilden die beiden Y-Kondensatoren. Sie sind einerseits mit den Kontakten des die X-Kapazität ausbildenden Grundkondensators verbunden und weisen eine gemeinsame Mittenkontaktierung auf für den Abgriff zweier Y-Kapazitäten. Damit ist ein metallisierter Mehrfachkapazitäts-Kondensator geschaffen, dessen X-Kapazität die beiden Y-Kapazitäten gewissermaßen huckepack und somit in äußerst kompakter Bauform trägt.

Es ist zwar grundsätzlich im Stand der Technik bekannt, Koaxialkondensatoren mit Mehrfachkapazitäten zu wickeln, wobei koaxial auf einen Grundwickel ein zweiter Wickel gleicher axialer Länge aufgebracht wird. Dies zeigt z.B. die US-A-3 921 041, bei der die Anordnung im übrigen so getroffen ist, daß auf einer Stirnseite ein gemeinsamer Anschlußkontakt für beide Kapazitäten und an der anderen Stirnseite des Doppelwickel-Kondensators zwei gegeneinander isolierte Kontakte zum Anschluß zweier weiterer Anschlüsse vorgesehen ist. Sinn und Zweck dieser Koaxialwicklung ist es, zwei Kondensatoren auf engstem Raum unterzubringen. Wie das Schaltbild nach Fig. 6 dieses Dokuments zeigt, entsteht eine paarige Kondensatoranordnung, deren beiden Kondensatoren eine gemeinsame Kondensatorplatte aufweisen.

Schließlich ist im selben zusammenhang noch auf die US-A-4 028 595 hinzuweisen, die einen ähnlich aufgebauten Kondensator mit zwei koaxialen Wickeln aufweist, die elektrisch vollständig voneinander getrennt sind.

Diesen Vorschlägen läßt sich folglich nur entnehmen, daß die koaxiale Bauweise von Kondensatorwickeln zu einem kompakten Aufbau einer Mehrfachkapazität führen kann. Eine irgendwie geartete Anregung, im Lichte des eingangs genannten Standes der Technik zu X-Y-Kondensatoren die Koaxialwicklung für einen X-Y-Kondensator zu nutzen, enthalten diese recht betagten Dokumente nicht.

Im übrigen versteht sich die Erfindung anhand ihrer nachfolgenden Beschreibung unter Bezugnahme auf ein in der Zeichnung dargestelltes bevorzugtes Ausführungsbeispiel. In den Zeichnungen zeigen:
- Fig. 1: einen schematischen Längsschnitt durch einen eine X-Kapazität und zwei Y-Kapazitäten aufweisenden Kondensator entsprechend der Erfindung,
- Fig. 2: einen sehr schematischen Querschnitt (gegenüber Fig. 1 verkleinert),
- Fig. 3: das sich aus der Aufbau der Kondensatorwickel und der Anordnung der Anschlüsse nach Fig. 1 ergebende Schaltbild des dort gezeigten Kondensators,
- Fig. 4: eine schematische Darstellung des die X-Kapazität bildenden Grundwickels und
- Fig. 5: eine schematische Darstellung der auf den Grundwickel aufgewickelten, die beiden Y-Kapazitäten bildenden Zusatzwickel.

Der insgesamt mit 10 bezeichnete Kondensator umfaßt einen inneren oder Grundwickel 11 mit metallisierten Stirnkontaktierungen 12 und jeweils daran angeschweißten Anschlußstiften 13 und 14. Die metallisierten Schichten 12 werden geläufigerweise nach dem SCHOOPschen Verfahren erzeugt. Dabei wird verflüssigtes Metall (vorzugsweise Zink und/oder Zinn) in einem oder mehreren Arbeitsgängen auf die beiden Wickelstirnseiten aufgespritzt.

Entsprechend der Erfindung trägt der Grundwickel 11 zwei koaxial auf ihn aufgewickelte zweite oder Zusatzwickel 15 und 16, wobei im folgenden davon ausgegangen wird, daß diese beiden Wickel 15 und 16 mechanisch und elektrisch untereinander identisch sind, was allerdings keineswegs zwangsläufig ist. Diese beiden Zusatzwickel 15 und 16 erstrecken sich nach außen bis zu den Stirnseiten des Grundwickels 11, und ihre nach außen weisenden Ringstirnflächen 15a und 16a sind von der metallischen Stirnkontaktierung 12 des Grundwickels 11 mit umfasst.

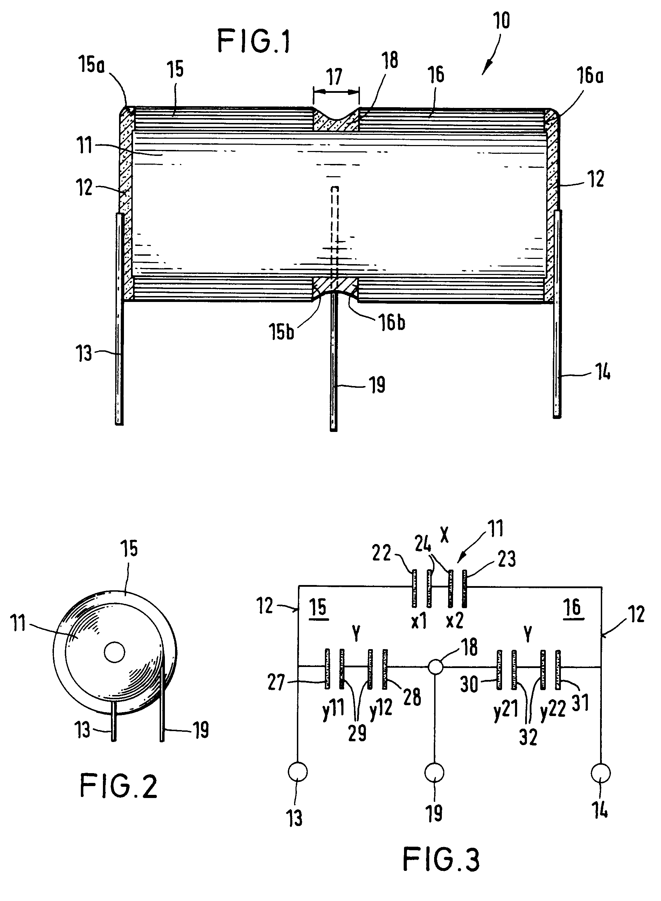

In der Mitte sind die beiden Zusatzwickel 15 und 16 um einen Abstand 17 voneinander distanziert. In diesen sich so bildenden umlaufenden Ringspalt ist eine weitere Spritzmetallkontaktierung 18 auf- bzw. eingebracht, die die zueinander weisenden Stirnringflächen 15b und 16b der Zusatzwickel 15 und 16 elektrisch leitend miteinander verbindet, wobei hier allerdings zum Grundwickel 11 kein elektrischer Kontakt besteht. Die Kontaktierung 18, die ebenfalls durch SCHOOPierung erzeugt werden kann, dient zum - etwa tangentialen - Anschluß eines an die Kontaktzone 18 angeschweißten Anschlußstiftes 19. Zur Vermeidung von Mißverständnissen, die sich aus Fig. 1 ergeben könnten, sei erwähnt, daß der dortige helle Abschnitt des Anschlußstiftes 19 nicht in den Wickel 11 eindringt. Die Darstellung soll vielmehr andeuten, daß dieser Abschnitt des Anschlußstiftes, lediglich die Kontaktierung 18 berührend, hinter der Zeichenebene der Fig. 1 liegt.

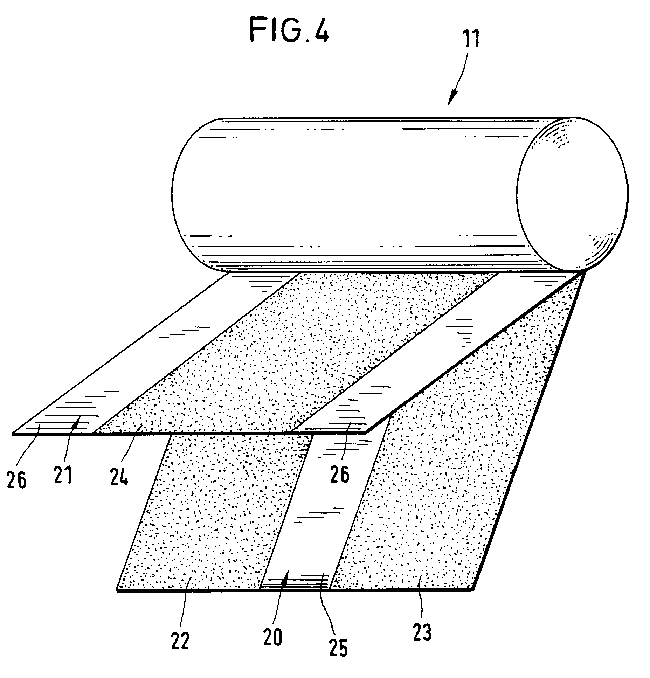

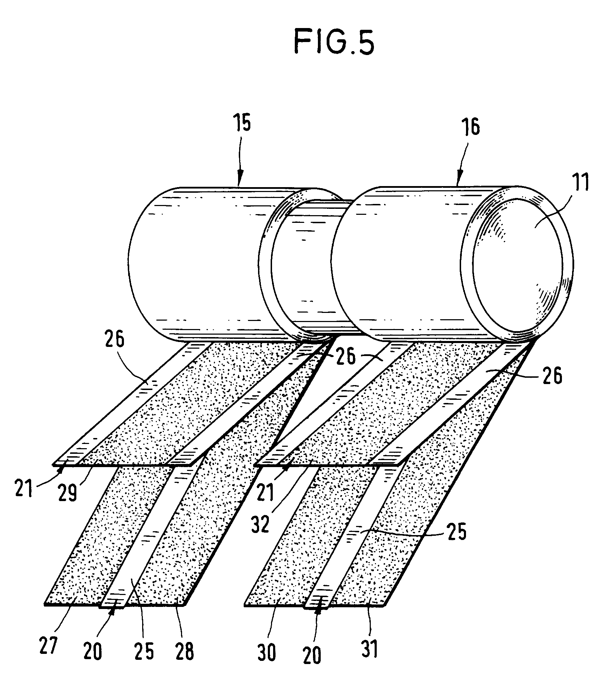

Sofern jede der insgesamt drei Kapazitäten, die des Grundwickels 11 und die der beiden Zusatzwickel 15 und 16, als zwei in innerer Reihenschaltung ausgelegte Kapazitäten ausgebildet ist, was anhand der Fig. 4 und 5 am Wickelaufbau noch näher erläutert werden wird, ergibt sich das Schaltbild der Fig. 3.

Der Grundwickel 11 bildet dabei die X-Kapazität mit den zwei in Serie geschalteten Kapazitäten X1, X2 aus. Der Abgriff der X-Kapazität erfolgt zwischen den Anschlußstiften 13 und 14. Die beiden Y-Kapazitäten, die aus in Serie geschalteten Einzelkapazitäten y11, y12 und y21, y22 bestehen, lassen sich zwischen den Kontaktstiften 13 und 19 einerseits und 19 und 14 andererseits abgreifen.

Fig. 4 stellt den schematischen Aufbau des Grundwickels 11 und Fig. 5 den der beiden Zusatzwickel 15 und 16 dar. Der Grundwickel 11 nach Fig. 4 besteht aus zwei ineinandergewickelten dielektrischen Folien 20 und 21 aus Kunststoff oder Papier, die jeweils mit elektrisch leitendem Streifen 22, 23 und 24 durch Bedampfung beschichtet sind. Dabei ist die Anordnung so getroffen, daß die Folie 20 zwei von einem zentralen, nicht leitenden Streifen 25 getrennte metallbeschichtete Streifen 22 und 23 aufweist, die sich jeweils bis zu den Längsrändern der Folie 20, und somit bis zu den Stirnkanten des Wickels 11 erstrecken. Demgegenüber weist die Folie 21 zwei unbeschichtete, also dielektrische Randstreifen 26 auf, zwischen denen sich der Belag 24 durchgehend erstreckt. Den in Fig. 3 dargestellten Kondensatorplatten der X-Kapazität entsprechen demnach die Beläge 22, 23 und 24 wie dort eingezeichnet.

Wie aus Fig. 5 erkennbar ist, ist jeder der beiden Zusatzwickel 15 und 16 prinzipiell genauso aufgebaut, weshalb die einzelnen Streifen ebenfalls mit 20 und 21 bezeichnet sind und auch die nicht beschichteten Zonen mit 25 und 26. Zur Unterscheidung für das Schaltbild nach Fig. 3 sind die metallischen Beläge mit neuen Ziffern bezeichnet, und zwar im einzelnen mit 27 bis 29 für den Wickel 15 und 30 bis 32 für den Wickel 16, welche Bezugszeichen sich analog in Fig. 3 wiederfinden.

Der Kondensator insgesamt läßt sich lediglich durch Wickelvorrichtungen und Wickelvorgänge erzeugen, und seine Anschlüsse, wie an sich üblich, nach dem SCHOOPschen Verfahren durch Aufspritzen von Metall auf die jeweiligen Wickelstirnseiten. Es sind keine sonstigen mechanischen Werkzeuge und Maschinen wie z.B. Sägen, Fräser od.dgl. erforderlich, die dem Kondensatorwickeln an sich auch fremd sind.

Es ist selbstverständlich, daß die Zusatzwickel 15 und 16 galvanisch vom Grundwickel 11 zu trennen sind. Dies geschieht beispielsweise dadurch, daß man die Wickelanfänge der beiden Zusatzwickel 15 und 16 in das äußere Wickelende des Grundwickels 11 einwickelt, wobei jedoch im anfänglich gemeinsamen Überdeckungsbereich zur Vermeidung einer Kontaktierung die metallischen Beläge entfernt, z.B. verdampft werden. Dieses Verfahren ist im Rahmen der Wickelbearbeitung von Kondensatoren grundsätzlich bekannt.

Lediglich die Kontaktierung 18, die sich anders als die Kontaktierungen 12 nicht vor den Wickelstirnseiten befindet, sondern zwischen den Ringstirnflächen 15b und 16b der axial voneinander beabstandeten Zusatzwickel 15 und 16, ist beim SCHOOPieren gegebenenfalls mit einer den Gesamtkondensator im übrigen abdeckenden Maske zu arbeiten.

Sofern die Darstellungen zylindrische Rundkondensatoren zeigen, sei darauf hingewiesen, daß es selbstverständlich möglich ist, auch Koaxialkondensatoren nach der vorliegenden Erfindung in an sich bekannter Weise in eine ellipsenähnliche, ovale Flachwickelanordnung zu pressen, beispielsweise um sie ein schmalreckeckiges Gehäuse einfügen zu können.

## Patentansprüche

1. Metallisierter Kunststoffolien- oder Papier-Kondensator mit Mehrfachkapazität, insbesondere X-Y-Kondensator zur Funkentstörung, umfassend wenigstens einen Wickel aus folienhaften Bahnen dielektrischen Materials, die auf einer Fläche bis auf freie Rand- oder Mittelstreifen mit Metallbeschichtungen versehen sind, sowie mit an metallisierten Kontakten angebrachten Anschlüssen zum Abgriff wenigstens zweier verschiedener Kapazitäten, dadurch gekennzeichnet, daß der Kondensator (10) einen ersten Wickel (Grundwickel 11) mit je einer Anschlußkontaktierung (12) an seinen Stirnseiten umfaßt und daß unter Berücksichtigung eines isolierten Übergangs auf diesen Grundwickel (11) zwei axialbeabstandet konzentrisch darauf angebrachte zweite Wickel (Zusatzwickel 15, 16) mit gleichfalls stirnseitigen Anschlußkontaktierungen (12) und einer gemeinsamen Mittenkontaktierung (18) aufgewickelt sind.

2. Kondensator nach Anspruch 1, dadurch gekennzeichnet, daß die beiden Zusatzwickel (15, 16) bis zu den Stirnseiten des Grundwickels (11) reichen und daß dort mit diesem die Anschlußkontaktierungen (12) für je einen gemeinsamen Anschluß (13, 14) ausgebildet sind.

3. Kondensator nach Anspruch 1 oder 2, dadurch gekennzeichnet, daß der Grundwickel (11) die X-Kapazität und jeder Zusatzwickel (15, 16) eine Y-Kapazität ausbilden.

4. Kondensator nach einem der Ansprüche 1 bis 3, dadurch gekennzeichnet, daß jede Anschlußkontaktierung (12, 18), an die die Anschlüsse (13, 14, 19) angeschweißt sind, durch Aufspritzen von Metall erzeugt ist.

5. Kondensator nach einem der Ansprüche 1 bis 4, dadurch gekennzeichnet, daß die Bahnen (20, 21) eines oder aller Wickel (11, 15, 16) derart angeordnete Beschichtungen aufweisen, daß jeweils zwei in Serie geschaltete Kapazitäten (X1, X2; Y11, Y12; Y21, Y22) ausgebildet sind.

6. Kondensator nach einem der Ansprüche 1 bis 5, dadurch gekennzeichnet, daß die beiden Zusatzwickel (15, 16) gleichzeitig mit dem inneren Anfang ihrer Wicklungen in das äußere Ende der Grundwicklung (11) unter Berücksichtigung einer Isolierung im Überlappungsbereich eingearbeitet sind.
